# EUROPÄISCHE PATENTSCHRIFT

(11) **EP 1 133 456 B1**
(45) Veröffentlichungstag und Bekanntmachung des Hinweises auf die Patenterteilung: **17.07.2002**
(21) Anmeldenummer: 99950718.9
(22) Anmeldetag: 14.10.1999
(51) Int. Cl.: C04B 24/26

(54) **VERWENDUNG VON DISPERSIONSPULVER-ZUSAMMENSETZUNGEN AUF DER BASIS VON VINYLAROMAT-1,3-DIEN-MISCHPOLYMERISATEN IN SELBSTVERLAUFENDEN BODENSPACHTELMASSEN UND ESTRICHEN**
DISPERSION-POWDER COMPOSITIONS CONTAINING VINYL AROMATIC-1,3-DIENE COPOLYMERS USED IN SELF-LEVELING FLOOR COATINGS AND SCREEDS
UTILISATION DE COMPOSITIONS DE POUDRES REDISPERSIBLES, A BASE DE COPOLYMERES CONSTITUES D'UN AROMATIQUE VINYLIQUE ET DE 1,3-DIENE, DANS DES ENDUITS POUR LE SOL ET DES CHAPES AUTONIVELANTS

(30) Priorität: 19.11.1998 DE 19853420
(43) Veröffentlichungstag der Anmeldung: 19.09.2001
(73) Patentinhaber: Wacker-Chemie GmbH, 81737 München (DE)
(72) Erfinder: WEITZEL, Hans-Peter, D-84571 Reischach (DE); MAYER, Theo, D-84387 Julbach (DE); HÄRZSCHEL, Reinhard, D-84489 Burghausen (DE)
(74) Vertreter: Schuderer, Michael, Dr.
(86) Internationale Anmeldenummer: EP9907706
(87) Internationale Veröffentlichungsnummer: WO0030990

(56) Entgegenhaltungen:
- EP-A- 0 408 099
- EP-A- 0 477 900
- EP-A- 0 537 411
- EP-A- 0 821 016
- DE-A- 19 526 759

## Beschreibung

Die Erfindung betrifft die Verwendung von in Wasser redispergierbaren, mit Schutzkolloiden stabilisierten Dispersionspulver-Zusammensetzungen auf der Basis von Vinylaromat-1,3-Dien-Mischpolymerisaten in selbstverlaufenden Bodenspachtelmassen und Estrichen.

Dispersionspulver werden seit vielen Jahren gerade im Bausektor als Kunststoffvergütung von hydraulisch abbindenden Systemen eingesetzt. Eine Übersicht über die Wirkung von Dispersionspulvern wird in der Zeitschrift TIZ (Tonindustrie-Zeitung) 9, S. 698 (1985) gegeben. Vor allem die Eigenschaften Haftung, Abriebbeständigkeit, Kratzfestigkeit und Biegezugfestigkeit von hydraulisch abbindenden Massen werden durch den Zusatz von Dispersionspulvern verbessert. Solche Dispersionspulver sind beispielsweise in der DE-A 2049114 (US-A 3784648) beschrieben und werden durch Sprühtrocknung wässriger Polymerdispersionen unter Zusatz von Polyvinylalkohol und weiterer Additive hergestellt. Das so erhältliche gut rieselfähige Pulver mit Teilchengrößen zwischen 10 und 250 µm redispergiert in Wasser wieder zur Dispersion mit Teilchengrößen zwischen 0.1 und 5 µm. Diese Redispersion sollte dabei über einen längeren Zeitraum stabil bleiben, das heißt sie sollte nicht zum Absitzen neigen.

Ein wichtiges Einsatzgebiet für Dispersionspulver stellen hydraulisch abbindende Bodenspachtelmassen dar. Solche Bodenspachtelmassen sind aus der DE-A 3028559 (GB-A 2083015) und der EP-A 116524 bekannt und bestehen im allgemeinen aus Zement oder Mischungen verschiedener Zemente, sorgfältig abgestimmten Füllstoffkombinationen, Dispersionspulver, Verflüssiger und gegebenenfalls weiteren Zusätzen. In der DE-A 3028559 wird vorgeschlagen die Massen mit Elastomerschnitzeln und mit Dispersionspulver auf der Basis von Vinylacetat-Ethylen-Copolymerisaten zu modifizieren. Die EP-A 116524 empfiehlt zur Herstellung von Verlaufsmassen Polymerpulver oder Polymerdispersionen zur Elastifizierung einzusetzen, wobei als Polymerpulver solche auf der Basis von Vinylester-Polymerisaten empfohlen werden.

Aus den Publikationen DE-B 2064081, DE-B 2102456 (GB-A 1325518), DE-B 2301435 und DE-B 2534564 ist die Empfehlung zu entnehmen, Polyvinylacetat-Dispersionspulver als Zusatz in erlaufsmassen einzusetzen. Die Verlaufsmassen werden im allgemeinen als Trockenmörtel an die Baustelle geliefert, dort einfach mit Wasser angerührt und auf dem Boden ausgebracht. Die Materialien verlaufen zu einer glatten Oberfläche, die entweder direkt als Nutzschicht oder als Untergrund für weitere Beschichtungen dient. Bei dieser Anwendung kommt es immer wieder zu Problemen. Gerade wenn man dickere Schichten auftragt bilden sich an der Oberfläche Unebenheiten wie Krater oder Pin-Holes. Die Oberfläche wird nicht so glatt wie vom Abnehmer gewünscht und muß nachgearbeitet werden.

Zur Verhinderung solcher Unebenheiten ist man bisher so vorgegangen, daß man Additive zugesetzt hat. In der EP-A 477900 (US-A 5118751) wird zur Beseitigung dieser Probleme der Einsatz von vollverseiften Copolymeren aus 1-Alkylvinylestern und Vinylestern empfohlen. Solche Additive sind aber relativ aufwendig herzustellen und verteuern die Dispersionspulverzusammensetzung in unakzeptablem Maß.

Es bestand daher die Aufgabe, die eben beschriebenen Nachteile bisher bekannter Bodenspachtelmassen, bezüglich der Oberflächenbeschaffenheit damit gefertigter Beschichtungen ohne Verwendung von vollverseiften Copolymeren aus 1-Alkylvinylestern und Vinylestern, zu überwinden, aber ohne die Vorteile, die der Zusatz von Dispersionspulvern erbringt, wie verbesserte Abriebbeständigkeit, Kratzfestigkeit und Haftung, zu verlieren.

Überraschenderweise wurde gefunden, daß bei Verwendung von Pulvern auf der Basis von mit Schutzkolloiden stabilisierten Vinylaromat-1,3-Dien-Polymerisaten auf die Verwendung von vollverseiften Copolymeren aus 1-Alkylvinylestern und Vinylestern verzichtet werden kann und dennoch gleichwertige Oberflächenbeschaffenheiten erhalten werden, bei gleichzeitig guter Abriebbeständigkeit, Kratzfestigkeit und Haftung.

Gegenstand der Erfindung ist die Verwendung von in Wasser redispergierbaren, mit Schutzkolloiden stabilisierten Dispersionspulver-Zusammensetzungen in selbstverlaufenden Bodenspachtelmassen und Estrichen, dadurch gekennzeichnet, daß die Dispersionspulver-Zusammensetzung
a) ein Basispolymerisat aus der Gruppe der Vinylaromat-1,3-Dien-Polymerisate und
b) 2 bis 25 Gew.-%, bezogen auf das Basispolymerisat, ein oder mehrere Schutzkolloide,
c) 3 bis 30 Gew.-%, bezogen auf das Gesamtgewicht polymerer Bestandteile, feinem Anitblockmittel,
d) 0.1 bis 10 Gew.-%, bezogen auf das Basispolymerisat, weitere Zuschlagstoffe enthält.

Geeignete Vinylaromaten sind Styrol und Methylstyrol, vorzugsweise ist Styrol copolymerisiert. Beispiele für 1,3-Diene sind 1,3-Butadien und Isopren, bevorzugt wird 1,3-Butadien. Im allgemeinen enthalten die Copolymerisate 20 bis 80 Gew.-%, vorzugsweise 30 bis 70 Gew.-%, Vinylaromat und 20 bis 80 Gew.-%, vorzugsweise 30 bis 70 Gew.-%, 1,3-Dien, wobei gegebenenfalls noch weitere Monomere enthalten sein können, und sich die Angaben in Gewichtsprozent jeweils auf 100 Gew.-% aufaddieren.

Gegebenenfalls können noch bis zu 30 Gew.-%, bezogen auf das Gesamtgewicht der Monomerphase, weitere mit Vinylaromaten und 1,3-Dienen copolymerisierbare Monomere wie Ethylen, Vinylchlorid, (Meth)acrylsäureester von Alkoholen mit 1 bis 15 C-Atomen oder Vinylester von unverzweigten oder verzweigten Carbonsäuren copolymerisiert sein.

Gegebenenfalls können noch 0.05 bis 10 Gew.-%, bezogen auf das Gesamtgewicht des Monomergemisches, Hilfsmonomere copolymerisiert sein. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)-und Methacryloxypropyl-tri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von -70°C bis +70°C, vorzugsweise -50°C bis +50°C, besonders bevorzugt -20°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgn die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Als Komponente b) geeignete Schutzkolloide sind beispielsweise Polyvinylalkohole, Polysaccharide in wasserlöslicher Form wie Stärken (Amylose und Amylopectin), modifizierte Stärken wie Stärkeether, beispielsweise Hydroxyalkyletherstärken, Dextrine und Cyclodextrine, Cellulosen und deren Carboxymethyl-, Methyl-, Hydroxyethyl-, Hydroxypropyl-Derivate, Poly(meth)acrylsäure, Poly(meth)acrylamid, Melaminformaldehydsulfonate, Naphthalinformaldehydsulfonate.

Bevorzugt sind Polyvinylalkohole mit einem Hydrolysegrad von 80 bis 95 Mol% und einer Höpplerviskosität, in 4 %-iger wässriger Lösung von 1 bis 30 mPas (Methode nach Höppler bei 20°C, DIN 53015). Geeignet sind auch hydrophob modifizierte Polyvinylalkohole mit einem Hydrolysegrad von 80 bis 95 Mol% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylacetats, wobei die hydrophob modifizierten Polyvinylalkohole eine Oberflächenspannung von < 40 mN/m, in 2 %-iger wässriger Lösung erzeugen. Es können auch Gemische der genannten Polyvinylalkohole eingesetzt werden.

Als Komponente c) geeignete Antiblockmittel sind dem Fachmann bekannt. Beispiele hierfür sind Calciumcarbonat, Magnesiumcarbonat, Talk, Gips, Kieselsäure und Silikate wie Magnesiumhydrosilikat. Die Teilchengröße beträgt im allgemeinen 10 nm bis 10 µm.

Weitere, als Komponente d) enthaltene, Bestandteile der Dispersionspulverzusammensetzungen sind Entschäumer, Pigmente, Füllstoffe, Schaumstabilisatoren, Hydrophobierungsmittel, Netzmittel, Zementverflüssiger. Die genannten Bestandteile können gegebenenfalls in dem Fachmann bekannten Mengen zugegeben werden.

Die Herstellung der schutzkolloidstabilisierten Polymerpulver erfolgt in bekannter Weise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen oder Vinylchlorid kann auch unter Druck, im allgemeinen zwischen 5 bar und 100 bar, gearbeitet werden. Die Initiierung der Polymerisation erfolgt mit den für die Emulsionspolymerisation gebräuchlichen Initiatoren oder Redox-Initiator-Kombinationen, beispielsweise Hydroperoxide wie tert.-Butylhydroperoxid, Azoverbindungen wie Azobisisobutyronitril, anorganische Initiatoren wie die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt. Als Redox-Initiatoren verwendet man Kombinationen aus den genannten Initiatoren in Kombination mit Reduktionsmitteln wie Natriumsulfit, Natriumhydroxymethansulfinat, Ascorbinsäure. Die Reduktionsmittelmenge beträgt vorzugsweise 0.01 bis 5.0 Gew.-%, bezogen auf das Gesamtgewicht der Monomere.

Die Stabilisierung des Polymerisationsansatzes erfolgt mittels der vorher genannten Schutzkolloide b), in der genannten Menge und bevorzugt unter Ausschluß von Emulgatoren. Bevorzugt werden die genannten teilverseiften Polyvinylacetate und teilverseiften, hydrophobierten Polyvinylacetate eingesetzt. Die Schutzkolloide werden im allgemeinen in einer Menge von insgesamt 1 bis 15 Gew.-%, bezogen auf das Gesamtgewicht der Monomere, bei der Polymerisation zugesetzt. Vorzugsweise wird der Schutzkolloid-Anteil dabei teilweise vorgelegt und teilweise nach Initiierung der Polymerisation zudosiert. Die Monomere können insgesamt vorgelegt werden, insgesamt zudosiert werden oder in Anteilen vorgelegt werden und der Rest nach der Initiierung der Polymerisation zudosiert werden.

In der bevorzugten Ausführungsform werden zur Herstellung der Verlaufsmassen Dispersionspulver eingesetzt, bei denen das Vinylaromat-1,3-Dien-Polymerisat a) durch Polymerisation von mindestens einem Vinylaromaten und mindestens einem 1,3-Dien, in Gegenwart des Schutzkolloids b) im Emulsionspolymerisationsverfahren polymerisiert worden ist; besonders bevorzugt unter Ausschluß von Emulgatoren.

Die mit den genannten Verfahren erhältlichen wässrigen Dispersionen haben einen Feststoffgehalt von 30 bis 75 Gew%, vorzugsweise von 40 bis 65 Gew.-%. Zur Herstellung der in Wasser redispergierbaren Dispersionspulver werden die wässrigen Dispersionen getrocknet, vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt. Zur Gewährleistung der Redispergierbarkeit ist es in der Regel erforderlich der Dispersion vor der Trocknung weitere Schutzkolloide als Verdüsungshilfe zuzugeben. In der Regel wird die Verdüsungshilfe in einer Menge von 5 bis 25 Gew.-%, bezogen auf die polymeren Bestandteile der Dispersion, eingesetzt. Bevorzugt werden die als Komponente b) genannten Polyvinylalkohole vor der Verdüsung als wässrige Lösung der Polymerdispersion zugemischt.

Während oder nach der Verdüsung wird der Anteil an Antiblockmittel (Komponente c) in der gewünschten Menge zugegeben. Zur Verbesserung der anwendungstechnischen Eigenschaften können während oder nach der Verdüsung weitere Zusätze (Komponente d) zugegeben werden. Weitere, gegebenenfalls enthaltene Bestandteile von Dispersionspulverzusammensetzungen sind beispielsweise Pigmente, Füllstoffe, Schaumstabilisatoren, Hydrophobierungsmittel, Netzmittel, Zementverflüssiger.

Für die Anwendung in selbstverlaufenden Bodenspachtelmassen (Verlaufsmassen) und Estrichen wird die Dispersionspulverzusammensetzung den entsprechenden Rezepturen zugemischt. Bevorzugt werden 0.5 bis 10 Gew.-% Dispersionspulver, bezogen auf das Trockengewicht der Rezeptur, zugegeben. Die Rezepturen enthalten noch 5 bis 80 Gew.-% anorganische, hydraulisch abbindende Bindemittel wie Zement, Gips oder deren Gemische; bevorzugt wird Zement als Bindemittel eingesetzt. Weiterer Rezepturbestandteil sind 5 bis 80 Gew.-% anorganische Füllstoffe wie Sand, Quarzmehl, Kreide, Kalksteinmehl, Filterasche oder deren Gemische. Zur Verbesserung der Verlaufseigenschaften können der Trockenmischung gegebenenfalls noch verlaufsfördernde Zusätze wie Casein oder Zementverflüssiger zugegeben werden. Die Angaben in Gew.-% beziehen sich dabei immer auf 100 Gew.-% Trockenmasse der Rezeptur für Bodenspachtelmassen. Die gebrauchsfertige Verlaufmasse erhält man schließlich durch Beigeben von Wasser zur obengenannten Trockenmischung.

Die gebrauchsfertige, mit Wasser angemachte Bodenspachtelmasse kann zur Herstellung von Estrichen und selbstnivellierenden Beschichtungen zum Ebnen, Ausgleichen und Glätten von Untergründen eingesetzt werden. Dazu wird die wässrige Bodenspachtelmasse ausgegossen, verteilt und getrocknet, wobei im allgemeinen Schichtdicken von 0.5 bis 30 mm resultieren. Bei der erfindungsgemäßen Vorgehensweise werden selbst bei Auftragung von dickeren Schichten glatte Oberflächen mit hervorragender mechanischer Festigkeit und Härte erhalten.

### Beispiele:

### Verwendete Stoffe:

### Vergleichsdispersion 1:

In Gegenwart von Polyvinylalkohol (Hydrolysegrad 88 Mol%, Höppler-Viskosität 4 mPas) polymerisierte wässrige Dispersion mit einem Festgehalt von 50 % auf der Basis eines Styrol-Butylacrylat-Copolymerisats mit einem Styrol-Gehalt von 45 Gew.-% und einem Butylacrylat-Gehalt von 55 Gew.-%.

### Dispersion 2:

In Gegenwart von Polyvinylalkohol (Hydrolysegrad 88 Mol%, Höppler-Viskosität 4 mPas) polymerisierte wässrige Dispersion mit einem Festgehalt von 50 % auf der Basis eines Styrol-Butadien-Copolymerisats mit einem Styrol-Gehalt von 65 Gew.-% und einem Butadiengehalt von 35 Gew.-%.

### Polyviol M05/140:

Polyvinylalkohol mit einer Höpplerviskosität von 5 mPas in wässriger Lösung und einer Verseifungszahl von 140 (Hydrolysegrad von 88 Mol%) der Wacker-Chemie GmbH.

### Polyviol M13/140:

Polyvinylalkohol mit einer Höpplerviskosität von 13 mPas in wässriger Lösung und einer Verseifungszahl von 140 (Hydrolysegrad von 88 Mol%) der Wacker-Chemie GmbH.

### Polyviol G04/140:

Polyvinylalkohol mit einer Höpplerviskosität von 4 mPas in wässriger Lösung und einer Verseifungszahl von 140 (Hydrolysegrad von 88 Mol%) der Wacker-Chemie GmbH.

### PME (gemäß EP-A 477900):

Vollverseiftes Copolymer aus Isopropenylacetat und Vinylacetat mit einer Höppler-Viskosität von 2.5 mPas, in 4%iger wässriger Lösung, und einem Isopropenylanteil von 20 Mol% der Wacker-Chemie GmbH.

### Melment F10:

Zementverflüssiger auf der Basis eines sulfonatgruppenhaltigen Melamin-Formaldehyd-Kondensationsproduktes der Firma SKW Trostberg.

### Wacker S 670:

Entschäumer auf Siliconbasis der Wacker Chemie GmbH.

### Agitan 305:

Entschäumer auf der Basis von flüssigen Kohlenwasserstoffen der Firma Münzig Heilbronn.

### Genapol PF20:

Nichtionischer Emulgator auf der Basis eines Ethylenoxid-Propylenoxid-Copolymer der Firma Hoechst.

### Beispiel 1:

4000 Gew.-Teile der Dispersion 2, 1100 Gew.-Teile Polyviol M05/140 als 20 %-ige Lösung in Wasser (10 Gew.-% bezogen auf Harz), 13.2 Gew.-Teile Wacker S 670 (0.6 Gew.-% bezogen auf Harz) und 500 Gew.-Teile Wasser wurden gründlich gemischt. Die Mischung wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene Pulver wurde mit 10 Gew.-%, bezogen auf das Gesamtgewicht an polymeren Bestandteilen, handelsüblichem Antiblockmittel (Gemisch aus Calcium-Magnesium-Carbonat und Magnesiumhydrosilikat) versetzt.

### Beispiel 2:

4000 Gew.-Teile der Dispersion 2, 1800 Gew.-Teile Polyviol M13/140 als 10 %-ige Lösung in Wasser(9 Gew.-% bezogen auf Harz), 20 Gew.-Teile Agitan 305 (1 Gew.-% bezogen auf Harz), 4 Gew.-Teile Genapol PF20 (0.2 Gew.-% bezogen auf Harz) und 500 Gew.-Teile Wasser wurden gründlich gemischt.
Die Mischung wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene Pulver wurde mit 10 Gew.-%, bezogen auf das Gesamtgewicht an polymeren Bestandteilen, handelsüblichem Antiblockmittel (Gemisch aus Calcium-Magnesium-Carbonat und Magnesiumhydrosilikat) versetzt.

### Vergleichsbeispiel 3:

4000 Gew.-Teile der Dispersion 1, 1100 Gew.-Teile Polyviol M05/140 als 20 %-ige Lösung in Wasser (10 Gew.-% bezogen auf Harz), 13.2 Gew.-Teile Wacker S670 (0.6 Gew.-% bezogen auf Harz) und 500 Gew.-Teile Wasser wurden gründlich gemischt. Die Mischung wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene Pulver wurde mit 10 Gew.-%, bezogen auf das Gesamtgewicht an polymeren Bestandteilen, handelsüblichem Antiblockmittel (Gemisch aus Calcium-Magnesium-Carbonat und Magnesiumhydrosilikat) versetzt.

### Vergleichsbeispiel 4:

4000 Gew.-Teile der Dispersion 1, 1100 Gew.-Teile Polyviol M05/140 als 20 %-ige Lösung in Wasser (10 Gew.-% bezogen auf Harz), 132 Gew.-Teile PME als 50 %-ige Lösung in Wasser (3 Gew.-% bezogen auf Harz) , 13.2 Gew.-Teile Wacker S670 (0.6 Gew.-% bezogen auf Harz) und 500 Gew.-Teile Wasser wurden gründlich gemischt.
Die Mischung wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene Pulver wurde mit 10 Gew.-%, bezogen auf das Gesamtgewicht an polymeren Bestandteilen, handelsüblichem Antiblockmittel (Gemisch aus Calcium-Magnesium-Carbonat und Magnesiumhydrosilikat) versetzt.

### Anwendungstechnische Prüfung:

### Herstellung einer Spachtelmasse:

| Stoff | Gew.-Teile |
|---|---|
| Portlandzement 35F | 60 |
| EFA-Filler (Elektrofilterasche-Füllstoff) | 15 |
| Quarzsand H33 | 153 |
| Millicarb (Calciumcarbonat-Füllstoff) | 30 |
| Carborex 20 (Calciumcarbonat-Füllstoff) | 39 |
| Melment F10 (Zementverflüssiger) | 1.5 |
| Tamol NN9401 (Zementverflüssiger) | 1.5 |
| | |
| Summe | 300 |

### Herstellung der Prüfbeschichtung:

Im Vergleichsversuch, ohne Zusatz von Dispersionspulver, wurden 300 Gew.-Teile der Spachtelmasse mit 51 Gew.-Teilen Wasser intensiv gemischt und anschließend auf einer Folie in 4 mm Schichtdicke vergossen.
Bei Bodenspachtelmassen mit Dispersionspulver wurden 290 Gew.-Teile der Spachtelmasse mit 10 Gew.-Teilen Dispersionspulver vermischt. Anschließend wurde die Masse mit 51 Gew.-Teilen Wasser intensiv gemischt und auf einer Folie in 4 mm Schichtdicke vergossen.

### Prüfung der Oberflächenbeschaffenheit:

Die Beurteilung erfolgt visuell mit folgender Bewertungsskala:

| | |
|---|---|
| 1 | sehr glatt, ohne Krater und Pin-Holes |
| 2 | sehr glatt, ohne Krater, wenige Pin-Holes |
| 3 | glatt, wenige Krater, viele Pin-Holes |
| 4 | glatt, einige Krater, viele Pin-Holes |

### Prüfung der Härte und Kratzfestigkeit:

Die Härte und Kratzfestigkeit wurde durch Kratzen mit dem Messer geprüft. Dies gibt zugleich eine Information über die Verschleißfestigkeit der Spachtelmasse.

### Bewertungsskala:

| | |
|---|---|
| 1 | sehr hart, sehr fester Verbund, sehr kratzfest |
| 2 | hart, fester Verbund, kratzfest |
| 3 | mäßig hart, mäßiger Verbund, mäßig kratzfest |
| 4 | mäßig hart, schlechter Verbund, wenig kratzfest |

Die Ergebnisse sind in der folgenden Tabelle aufgeführt:

| Spachtelmasse | Oberflächenbeschaffenheit | Härte / Kratzfestigkeit |
|---|---|---|
| Beispiel 1 | 1 | 1 |
| Beispiel 2 | 1 | 1 |
| V.-Beispiel 3 | 3 | 2 |
| V.-Beispiel 4 | 1 | 2 |
| Ohne Pulver | 3 | 4 |

Der Vergleich von Beispiel 1 und Beispiel 2 mit Vergleichsbeispiel 3 zeigt, daß nur mit Polyvinylalkohol-stabilisierten Polymerpulvern auf der Basis von Styrol-Butadien-Copolymeren die erforderliche Oberflächenbeschaffenheit, ohne glättende Zusätze, erhalten wird. Mit Styrol-Butylacrylat-Pulvern gemäß Vergleichsbeispiel 3 erhält man nur unbefriedigende Oberflächen, die bezüglich der Oberflächenglätte genauso schlecht sind, wie die von Spachtelmassen ohne Dispersionspulverzusatz (siehe Vergleich ohne Pulver).
Selbst nach Zugabe von glättend wirkenden Zusätzen gemäß EP-A 477900 erreicht die Oberflächenbeschaffenheit von mit Styrol-Butylacrylat modifizierten Spachtelmassen (Vergleichsbeispiel 4) nicht die bei der erfindungsgemäßen Verwendung von Polyvinylalkohol-stabilisierten Styrol-Butadien-Polymerpulvern erhaltene Qualität.

## Patentansprüche

1. Verwendung von in Wasser redispergierbaren, mit Schutzkolloiden stabilisierten Dispersionspulver-Zusammensetzungen in selbstverlaufenden Bodenspachtelmassen und Estrichen, **dadurch gekennzeichnet, daß** die Dispersionspulver-Zusammensetzung
a) ein Basispolymerisat aus der Gruppe der Vinylaromat-1,3-Dien-Polymerisate und
b) 2 bis 25 Gew.-%, bezogen auf das Basispolymerisat, ein oder mehrere Schutzkolloide,
c) 3 bis 30 Gew.-%, bezogen auf das Gesamtgewicht polymerer Bestandteile, feinem Antiblockmittel,
d) 0.1 bis 10 Gew.-%, bezogen auf das Basispolymerisat, weitere Zuschlagstoffe enthält.

2. Verwendung nach Anspruch 1, **dadurch gekennzeichnet, daß** die Dispersionspulver-Zusammensetzung erhalten wird durch Emulsionspolymerisation eines Gemisches enthaltend mindestens einen Vinylaromaten und mindestens ein 1,3-Dien in Gegenwart von einem oder mehreren Schutzkolloiden, Trocknung der damit erhaltenen Polymerdispersion und Zumischung der Komponenten c) und d) während oder nach der Trocknung.

3. Verwendung nach Anspruch 2, **dadurch gekennzeichnet, daß** die Emulsionspolymerisation unter Ausschluß von Emulgator durchgeführt wird.

4. Verwendung nach Anspruch 1 bis 3, **dadurch gekennzeichnet, daß** als Komponente b) Polyvinylalkohole mit einem Hydrolysegrad von 80 bis 95 Mol% und einer Höpplerviskosität, in 4 %-iger wässriger Lösung von 1 bis 30 mPas oder hydrophob modifizierte Polyvinylalkohole mit einem Hydrolysegrad von 80 bis 95 Mol% und einer Höpplerviskosität, in 4 %-iger wässriger Lösung von 1 bis 30 mPas, welche eine Oberflächenspannung von < 40 mN/m, in 2 %-iger wässriger Lösung erzeugen, eingesetzt werden, oder Gemische der genannten Polyvinylalkohole eingesetzt werden.

5. Verwendung nach Anspruch 1 bis 4, **dadurch gekennzeichnet, daß** als Vinylaromat 20 bis 80 Gew.-% Styrol und als 1.3-Dien 20 bis 80 Gew.-% 1.3-Butadien enthalten sind, wobei gegebenenfalls noch weitere Monomere enthalten sein können.

6. Verwendung nach Anspruch 1 bis 5, **dadurch gekennzeichnet, daß** die Bodenspachtelmassen und Estriche einen Anteil von 0.5 bis 10 Gew.-% Dispersionspulverzusammensetzung, 5 bis 80 Gew.-% anorganische, hydraulisch abbindende Bindemittel, 5 bis 80 Gew.-% anorganische Füllstoffe enthalten, wobei die Angaben in Gew.-% auf 100 Gew.-% Trockenmasse bezogen sind, und die gebrauchsfertige Bodenspachtelmasse oder der Estrich durch Beigeben von Wasser erhalten wird.

7. Verfahren zur Herstellung von Estrichen und selbstnivellierenden Beschichtungen zum Ebnen, Ausgleichen und Glätten von Untergründen durch Ausgiessen, Verteilen und Trocknen einer wässrigen Bodenspachtelmasse in einer Menge, daß Schichtdicken von 0.5 bis 30 mm erhalten werden, wobei die Trockenmasse der Bodenspachtelmasse einen Anteil von 0.5 bis 10 Gew.-% Dispersionspulverzusammensetzung gemäß Anspruch 1 bis 5, 5 bis 80 Gew.-% anorganische, hydraulisch abbindende Bindemittel, 5 bis 80 Gew.-% anorganische Füllstoffe enthalten, enthält und die Angaben in Gew.-% auf 100 Gew.-% Trockenmasse bezogen sind.

## Claims

1. Use of water-redispersible, protective-colloidstabilized dispersion powder compositions in self-levelling screeds or trowel-applied flooring compositions, **characterized in that** the dispersion powder composition comprises
a) a base polymer selected from the group consisting of the vinylaromatic-1,3-diene polymers,
b) from 2 to 25% by weight, based on the base polymer, of one or more protective colloids,
c) from 3 to 30% by weight, based on the total weight of polymeric constituents, of fine antiblocking agent, and
d) from 0.1 to 10% by weight, based on the base polymer, of other additives.

2. Use according to Claim 1, **characterized in that** the dispersion powder composition is obtained by emulsion polymerization of a mixture comprising at least one vinylaromatic and comprising at least one 1,3-diene, in the presence of one or more protective colloids, drying the resultant polymer dispersion, and admixing components c) and d) during or after the drying process.

3. Use according to Claim 2, **characterized in that** the emulsion polymerization is carried out without the use of any emulsifier.

4. Use according to Claims 1 to 3, **characterized in that** the component b) used comprises polyvinyl alcohols with a degree of hydrolysis of from 80 to 95 mol% and with a Höppler viscosity of from 1 to 30 mPas in 4% strength aqueous solution, or comprises hydrophobically modified polyvinyl alcohols with a degree of hydrolysis of from 80 to 95 mol% and with a Höppler viscosity of from 1 to 30 mPas in 4% strength aqueous solution, these producing a surface tension of < 40 mN/m in 2% strength aqueous solution, or comprises a mixture of the polyvinyl alcohols mentioned.

5. Use according to Claims 1 to 4, **characterized in that** from 20 to 80% by weight of styrene are present as vinylaromatic compound and from 20 to 80% by weight of 1,3-butadiene are present as 1,3-butadiene, and other monomers may also be present here, where appropriate.

6. Use according to Claims 1 to 5, **characterized in that** the screeds and trowel-applied flooring compositions have from 0.5 to 10% by weight of dispersion powder composition, from 5 to 80% by weight of inorganic, hydraulically setting binders, and from 5 to 80% by weight of inorganic fillers, where the % by weight data are based on 100% by weight of dry composition, and the ready-to-use trowel-applied flooring composition or the screed is obtained by adding water.

7. Process for preparing screeds and self-levelling coatings for levelling, evening or smoothing substrates, by pouring out, distributing and drying that amount of trowel-applied flooring composition which gives a layer thickness of from 0.5 to 30 mm, where the dry weight of the trowel-applied flooring composition comprises from 0.5 to 10% by weight of dispersion powder composition according to Claims 1 to 5, from 5 to 80% by weight of inorganic, hydraulically setting binders, and from 5 to 80% by weight of inorganic fillers, and the % by weight data are based on 100% by weight of dry weight.

## Revendications

1. Utilisation de compositions de poudres de dispersion redispersables dans l'eau et stabilisées par des colloïdes protecteurs dans des mastics pour planchers et des chapes auto-nivelants, **caractérisée en ce que** la composition de poudre de dispersion comprend
a) un polymère de base parmi le groupe constitué des polymères vinylaromatiques-1,3-diène, et
b) de 2 à 25 % en poids, par rapport au polymère de base, d'un ou de plusieurs colloïdes protecteurs,
c) de 3 à 30 % en poids, par rapport au poids total des constituants polymères, d'un agent anti-adhérent fin,
d) de 0,1 à 10 % en poids, par rapport au polymère de base, d'autres additifs.

2. Utilisation selon la revendication 1, **caractérisée en ce que** la composition de poudre de dispersion est obtenue par polymérisation en émulsion d'un mélange comprenant au moins un composé vinylaromatique et au moins un 1,3-diène en présence d'un ou de plusieurs colloïdes protecteurs, séchage de la dispersion polymère ainsi obtenue et incorporation des composants c) et d) durant ou après le séchage.

3. Utilisation selon la revendication 2, **caractérisée en ce que** la polymérisation en émulsion est réalisée en l'absence d'un émulsifiant.

4. Utilisation selon les revendications 1 à 3, **caractérisée en ce que** l'on utilise, en tant que composant b), des alcools polyvinyliques présentant un degré d'hydrolyse de 80 à 95 % en moles et une viscosité de Höppler, dans une solution aqueuse à 4 %, de 1 à 30 mPas, ou des alcools polyvinyliques à modification hydrophobe présentant un degré d'hydrolyse de 80 à 95 % en moles et une viscosité de Höppler dans une solution aqueuse à 4 %, de 1 à 30 mPas, lesquels produisent une tension superficielle < 40 mN/m, dans une solution aqueuse à 2 %, ou des mélanges des alcools polyvinyliques mentionnés.

5. Utilisation selon les revendications 1 à 4, **caractérisée en ce que** de 20 à 80 % en poids de styrène sont présents en tant que composé vinylaromatique et de 20 à 80 % en poids de 1,3-butadiène sont présents en tant que 1,3-diène, d'autres monomères pouvant également être éventuellement présents.

6. Utilisation selon les revendications 1 à 5, **caractérisée en ce que** les mastics pour planchers et les chapes présentent une proportion de 0,5 à 10 % en poids d'une composition de poudre de dispersion, de 5 à 80 % en poids de liants inorganiques à prise hydraulique, de 5 à 80 % en poids de charges inorganiques, les données en % en poids étant par rapport à 100 % en poids de masse sèche, et le mastic pour planchers ou la chape prêt(e) à l'emploi étant obtenu en ajoutant de l'eau.

7. Procédé de production de chapes et de revêtements auto-nivelants destinés au nivellement, à l'égalisation et au lissage de substrats en versant, en répartissant et en séchant un mastic pour planchers aqueux en une quantité permettant d'obtenir des épaisseurs de couches de 0,5 à 30 mm, la masse sèche du mastic pour planchers présentant une proportion de 0,5 à 10 % en poids d'une composition de poudre de dispersion selon les revendications 1 à 5, de 5 à 80 % en poids de liants inorganiques à prise hydraulique, de 5 à 80 % en poids de charges inorganiques, et les données en % en poids étant par rapport à 100 % en poids de masse sèche.
